Europäisches Patentamt

European Patent Office

Office européen des brevets

(19)

(11) Publication number: **0 140 577**
**B1**

## (12) EUROPEAN PATENT SPECIFICATION

(45) Date of publication of patent specification: **30.11.88**

(51) Int. Cl.⁴: **F 16 K 31/50, F 16 K 1/38**

(21) Application number: **84306533.5**

(22) Date of filing: **26.09.84**

(54) Needle valve.

(30) Priority: **06.10.83 US 539362**

(43) Date of publication of application:
**08.05.85 Bulletin 85/19**

(45) Publication of the grant of the patent:
**30.11.88 Bulletin 88/48**

(84) Designated Contracting States:
**DE FR GB SE**

(56) References cited:
**BE-A- 646 573**
**DD-A- 29 951**
**DE-B-1 251 120**
**FR-A-1 561 610**
**FR-A-2 184 143**
**GB-A-2 063 428**
**US-A-4 077 606**

(73) Proprietor: **The BOC Group, Inc.**
**85 Chestnut Ridge Road**
**Montvale, New Jersey 07645 (US)**

(72) Inventor: **Braatz, Robert E.**
**414 Woodview DRive**
**Sun Prairie Wisconsin 53590 (US)**

(74) Representative: **Gough, Peter et al**
**c/o THE BOC GROUP PLC Patent Department**
**Chertsey Road**
**Windlesham Surrey GU20 6HJ (GB)**

Courier Press, Leamington Spa, England.

## Description

This invention relates to flow control valves and, more particularly, to a needle valve used to control the precise flow of a gas passing therethrough.

Needle valves are, of course, used in a wide variety of applications where precision is needed in varying flow over a particular range. The valves comprise a valve seat having a finely designed cylindrical bore and a tapered needle that moves within that cylindrical opening to vary the effective opening size and thus control the flow of gas through that opening. The movement of the needle is generally contolled by turning a valve stem which supports the needle and which is fitted into a housing with an appropriate threaded engagement.

One characteristic feature of such valves is a means to prevent back-lash or movement of the valve stem with respect to its threaded housing as result of play or clearance between the threads. Normally, a force is applied to maintain the threads of the valve stem against the corresponding threads of the housing. However, such force is applied in a non-uniform manner. When the conventional needle valve is in its fully open position, that is, the needle is as retracted from the cylindrical bore in its valve seat as is possible, there still must be a force on the valve stem holding it firmly against the respective threads. As the needle valve is then moved towards its closed position, that force is generally increased due to the means of applying the force, and thus such actual force increases to a high value that is really not necessary, causing unnecessary wear to the threads and causing shorting valve life.

A needle valve is known in accordance with the prior art portion of Claim 1 (FR—A—2184143) which includes a housing having an inlet and an outlet forming a flow path for the passage therethrough of a gas the flow of which is to be controlled. Included in the flow path is a valve seat having a cylindrical opening and a needle threadly engaged with respect to the housing is movable towards and away from the valve seat to decrease and increase the flow of gas through the needle valve. The needle enters the valve seat so as contact physically the inner surface of the valve seat throughout its movement. A spring exerts a force between the threads of the needle and the co-operating threads on the housing in order to prevent backlash or movement of the valve stem with respect to the threads in the housing.

The invention as claimed is intended to ensure that force exerted by the spring is constant or substantially constant throughout the full range of movement of the needle relative to the valve seat.

According to the present invention a needle valve comprises a housing having an inlet means and an outlet means forming a flow path therethrough, a valve seat including a cylindrical opening positioned in said flow path, a needle threadedly engaged with respect to the housing and movable towards and away from the valve seat to decrease and increase the flow through the needle valve, the needle entering the valve seat so as to contact physically the inner surface of the valve seat throughout its movement, and a spring exerting a force between the threads of the needle and the co-operating threads on the housing, characterised in that the needle is rotatable for movement towards and away from the valve seat, the needle entering the cylindrical opening in the valve seat at a predetermined angle to contact the edge of the inner suface of said opening, and in that the spring exerts a constant force between the threads of the needle and the corresponding threads associated with the housing throughout the movement of the needle with respect to the valve seat.

The overall needle valve thus provides for a highly accurate unit which is reproducable by manufacturing with predictable results. In addition, since less force needs to be applied to the valve stem because it is maintained constant throughout the valve movement, less wear is experienced to the threads of the valve stem.

The foregoing and other advantages and features of the present invention will become readily apparent from the following description.

An embodiment of the invention will now be described by way of example, reference being made to the Figures of the accompanying diagrammatic drawings in which:-

Figure 1 is a side view, partly in cross section, of a needle valve constructed in accordance with the present invention; and

Fig. 2 is a cross-sectional view of the needle valve of Fig. 1 taken along the lines 2—2; and

Fig. 3 is a cross-sectional view of a valve stem used in the construction of Fig. 1.

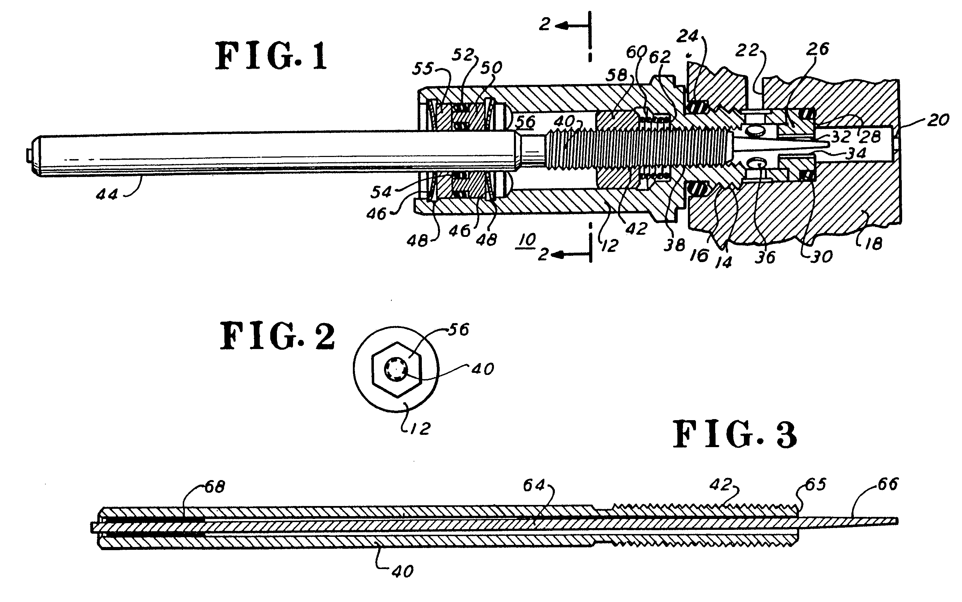

In Fig. 1 there is shown a side view, partly in cross section, of a needle valve 10 constructed in accordance with the present invention. The needle valve 10 comprises a housing 12 and which has external threads 14 at its forward end for engagement with suitable internal threads 16 formed in a valve block 18. It should be noted that the valve block 18 can be a manifold or other gas directing device into which a needle valve may be mounted to control a gas.

The valve block 18 has formed therein, an inlet 20 through which gas is provided to the needle valve 10 and has an outlet 22 that channels the gas leaving needle valve 10 for some utilization. As shown, the needle valve 10 is preferably screwed into the valve block 18 and an o-ring 24 prevents leakage of gas therebetween.

A valve seat 26 is secured within valve block 18 by abutting against a shoulder 28 formed in valve block 18. The valve seat 26 has an o-ring 30 for sealing against the inside surface of valve block 18 and has a cylindrical bore 32 which is of uniform radius and which is preferably formed by a silver insert 34 affixed to the valve seat 26.

The cylindrical bore 32 forms the inlet means of needle valve 10 and an outlet means is provided by means of holes 36 through which the gas passes to outlet 22 of the valve block 18.

Within housing 12, there are formed, a set of internal threads 38 into which, as shown, a valve stem 40 is threadedly engaged having corresponding external threads 42. The distal end 44 of valve stem 40 is smooth and may have a knob (not shown) affixed thereto for ease in rotating valve stem 40.

The valve stem 40 is sealed as it passes through housing 12 by means of a pair of springs 46 which are fitted into recesses 48 in the internal surface of the housing 12 and sandwich therebetween a retainer 50 on to which are fitted o-rings 52 and 54 to seal against leakage along valve stem 40 and bearing 55 to support the same.

An internal cavity 56 within housing 12 is formed by a hexagonal broach and a hex nut 58 rides therein. The hex nut 58 has the same threads as the external threads 42 of valve stem 40 and fits within internal cavity 56 such that hex nut 58 cannot turn (See Fig. 2).

A bias is constantly exerted against valve stem 40 by means of spring 60 which has one end thereof held in the housing 12 at shoulder 62 formed within internal cavity 56 and the other end thereof exerting a force against the hex nut 58 to maintain the bias as will be explained later when the assembly of the needle valve 10 is described.

Turning now to Fig. 3, there is shown a cross-sectional view of the valve stem 40 used in the needle valve 10 of the present invention. As shown, within the valve stem 40 is a needle 64 having a tapered end 66 and having its other or distal end secured to the valve stem 40 by means such as solder 68. The needle 64 is soldered in an angled position within valve stem 40 such that it contacts the edge of opening 65 of valve stem 40 as the needle 64 emerges therefrom.

Returning again to Fig. 1, the constant force exerted upon valve stem 40 can best be exemplified by describing the assembly of certain parts of the needle valve 10.

Assembly of the valve stem 40 takes place prior, of course, to the assembly of springs 46, retainer 50 and bearing 55 such that the distal end of the housing 12 is open. Spring 60 is first placed within internal cavity 56 and abuts shoulder 62. Next, hex nut 58 is inserted within internal cavity 56 which, as explained, is hexagonal shaped about the same size as hex nut 58 such that hex nut 58 cannot rotate within internal cavity 56 but it can move axially. The valve stem 40 is then inserted into internal cavity 56 and is rotated such that its external treads 42 engage corresponding threads of the hex nut 58 for a predetermined number of turns. After those predetermined turns have been completed and valve stem 40 is sufficiently engaged within hex nut 58, a force is exerted against the distal end 44 of valve stem 40 causing the hex nut 58 to engage spring 60 and compress the spring 60 a predetermined amount. Preferably the spring 60 is selected such that a force of approximately 3 lbs. causes sufficient compression for purposes of this invention. That force is maintained while the valve stem 40 is again rotated so that its external threads 42 now engage the internal threads 38 of housing 12. Once the valve stem 40 is sufficiently threadedly engaged to the internal threads 38, the spring compression is fixed and likewise, the force exerted by the spring bias acting on valve stem 40 is fixed.

The distal end of housing 12 is thereupon closed and support provided for valve stem 40 by inserting one of the springs 46 within its recess 48. The retainer 50 is placed into housing 12 and surrounds the valve stem 40. The o-rings 52 and 54 are fitted onto retainer 50 to provide sealing along the interior of the housing 12 and along the valve stem 40. The bearing 55 is thereupon slipped along the distal end 44 and is held in place within housing 12 by the other spring 46 fitted within its recess 48.

The valve stem 40 thus can continue to be rotated until the tapered end 66 of needle 64 is operatively associated with valve seat 26 and valve stem 40 rotated to move the tapered end 66 of needle 64 with respect to valve seat 26 to open or close the opening through which the gas passes and thus control its flow. Yet the force exerted by spring 60 continues to exert a constant force upon valve stem 40. It should also be noted that the tapered end 66 of needle 64 contacts, at all times, the valve seat 26 and continues to maintain that contact even when valve stem 40 is withdrawn to its fully operative open position. Thus, the angled pitch of the needle 64 retains contact between the needle 64 and valve seat 26 such that the shape of the opening therebetween is not changed in overall configuration even through changed in area as the valve stem 40 is moved to open or close needle valve 10. The flow characteristics are thereby kept more constant than if the needle were to move its position around the inside of its valve seat.

## Claims

1. A needle valve (10) comprising a housing (12) having an inlet means (32) and an outlet means (36) forming a flow path therethrough, a valve seat (26) including a cylindrical opening positioned in said flow path, a needle (64) threadedly engaged with respect to the housing (12) and movable towards and away from the valve seat (26) to decrease and increase the flow through the needle valve (10), the needle (64) entering the valve seat (26) so as to contact physically the inner surface of the valve seat (26) throughout its movement, and a spring (60) exerting a force between the threads of the needle (64) and the co-operating threads on the housing (12), characterised in that the needle (64) is rotatable for movement towards and away from the valve seat (26), the needle (64) entering the cylindrical opening in the valve seat (26) at a predetermined angle to contact the edge of the inner surface of said opening, and in that the spring (60) exerts a constant force between the threads (42) of the needle (64) and the corresponding threads (38) associated with the housing (12) throughout the movement of the needle (64) with respect to the valve seat (26).

2. A needle valve as claimed in Claim 1, characterised in that the spring (60) has one end thereof fixed with respect to said needle (64) and has the other end acting against the threads of said needle (64).

3. A needle valve (10) as claimed in Claim 2, characterised in that a follower (58) is threadedly engaged to said needle (64) and maintains a fixed position in said housing (12) as said needle (64) moves, and said spring (60) produced the bias against said follower (58).

## Patentansprüche

1. Nadelventil (10) mit einem Gehäuse (12), das ein Einlaßmittel (32) und ein Auslaßmittel (36) besitzt, welche einen Strömungsweg durch dieses bilden, einen Ventilsitz (26) einschließlich einer in dem Strömungsweg angeordneten zylindrischen Öffnung, eine bezüglich des Gehäuses (12) in Gewindeeingriff stehende und zu dem Ventilsitz (26) hin und von diesem weg zur Verminderung bzw. Erhöhung der Strömung durch das Nadelventil (10) bewegbare Nadel (64), wobei die Nadel (64) in den Ventilsitz (16) eintritt, um so körperlich die Innenfläche des Ventilsitzes (26) in ihrer gesamten Bewegung zu berühren, und eine eine Kraft zwischen den Gewindegängen der Nadel (64) und den damit zusammenwirkenden Gewindegängen an dem Gehäuse (12) aufbringende Feder (60), dadurch gekennzeichnet, daß die Nadel (64) zur Bewegung zu dem Ventilsitz (26) hin und von diesem weg drehbar ist, daß die Nadel (64) in die zylindrische Öffnung im Ventilsitz (26) mit einem vorbestimmten Winkel eintritt, um die Kante der Innenfläche der Öffnung zu berühren, und daß die Feder (60) eine konstante Kraft zwischen den Gewindegängen (42) der Nadel (64) und den entsprechenden, dem Gehäuse (12) zugeordneten Gewindegängen (38) während der gesamten Bewegung der Nadel (64) mit Bezug auf den Ventilsitz (26) ausübt.

2. Nadelventil nach Anspruch 1, dadurch gekennzeichnet, daß die Feder (60) ein bezüglich der Nadel (64) befestigtes Ende besitzt und daß das andere Ende gegen die Gewindegänge der Nadel (64) wirkt.

3. Nadelventil (10) nach Anspruch 2, dadurch gekennzeichnet, daß ein Folgeteil (58) auf die Nadel (64) aufgeschraubt ist und eine feste Lage in dem Gehäuse (12) beibehält, während sich die Nadel (64) bewegt, und daß die Feder (60) die Vorspannung gegen das Folgeteil (58) erzeugt.

## Revendications

1. Valve (10) à pointeau comprenant un corps (12) comportant un moyen d'entrée (32) et un moyen de sortie (36) formant un chemin d'écoulement, un siège (26) de valve comportant une ouverture cylindrique située dans ledit chemin d'écoulement, un pointeau (64) qui se visse dans le corps (12) et peut se déplacer pour se rapprocher et s'écarter du siège (26) de valve pour réduire ou augmenter le débit de passage dans la valve (10) à pointeau, le pointeau (64) pénétrant dans le siège (26) de valve de façon à être physiquement en contact avec la surface intérieure du siège (26) de valve pendant tout son déplacement, et un ressort (60) exerçant un effort entre les filets du pointeau (64) et les filets du corps (12) qui coopèrent avec eux, valve caractérisée en ce que le pointeau (64) peut tourner pour se déplacer en se rapprochant et en s'éloignant du siège (26) de valve, le pointeau (64) pénétrant dans l'ouverture cylindrique du siège (26) de valve avec un angle déterminé à l'avance afin d'entrer en contact avec le bord de la surface intérieure de ladite ouverture, et en ce que le ressort (60) applique une force exerçant un effort constant entre les filets (42) du pointeau (64) et les filets correspondants (38) associés au corps (12) pendant tout le déplacement du pointeau (64) par rapport au siège (26) de valve.

2. Valve à pointeau selon la revendication 1, caractérisée en ce qu'une des extrémités du ressort (60) est fixe par rapport audit pointeau (64) et son autre extrémité agit contre les filets dudit pointeau (64).

3. Valve (10) à pointeau selon la revendication 2, caractérisée en ce qu'un organe suiveur (58) est en prise par filetage avec ledit pointeau (64) et maintient une position fixe dans ledit corps (12) pendant que ledit pointeau (64) se déplace et en ce que ledit ressort (60) exerce une poussée contre ledit organe suiveur (58).

# FIG.1

# FIG.2

# FIG.3

EP 0 140 577 B1